# EUROPEAN PATENT SPECIFICATION

(11) **EP 3 284 617 B1**
(45) Date of publication and mention of the grant of the patent: **17.07.2019**
(21) Application number: 16779913.9
(22) Date of filing: 30.03.2016
(51) Int. Cl.: B60C 11/03, B60C 11/12, B60C 17/00

(54) **RUN-FLAT TIRE**
NOTLAUFREIFEN
PNEU À AFFAISSEMENT LIMITÉ

(30) Priority: 15.04.2015 JP 2015083748
(43) Date of publication of application: 21.02.2018
(73) Proprietor: Bridgestone Corporation, Tokyo 104-8340 (JP)
(72) Inventor: MORII, Shogo, Tokyo 104-8340 (JP)
(74) Representative: Oxley, Robin John George
(86) International application number: PCT/JP2016/060311
(87) International publication number: WO 2016/167122

(56) References cited:
- EP-A1- 2 436 538
- WO-A1-2013/015408
- JP-A- H1 148 710
- JP-A- H05 112 105
- JP-A- H05 112 105
- JP-A- 2002 046 430
- JP-A- 2011 073 511
- JP-A- 2013 082 307
- JP-A- 2013 216 149
- JP-A- 2013 230 755
- JP-A- 2013 244 931

## Description

### TECHNICAL FIELD

The present invention relates to a run-flat tire (hereinafter also simply referred to as "tire"), and in particular to a run-flat tire relating to an improvement in arrangement conditions for sipes that are provided in a tread surface of a tire tread.

### BACKGROUND ART

Side-reinforced type run-flat tires whose side portions are reinforced with a side-reinforcing rubber are known as tires that can safely run a certain distance even when the inner pressure thereof is reduced due to puncture or the like. In addition to the run-flat durability performance, various types of performance that are required of normal tires are also required of run-flat tires. For example, when used in cold regions, it is important to have favorable on-snow performance.

As a related art relating to improvement in on-snow performance of a tire, for example, Patent Document 1 discloses a technique that specifies, in a pneumatic tire having a plurality of blocks arranged side by side in a tire circumferential direction by a plurality of circumferential main grooves extending in the tire circumferential direction and a plurality of lug grooves intersecting with the tire circumferential direction on a tread surface of a tread portion and having narrow groove-shaped sipes provided intersecting with the tire circumferential direction on tread surfaces of the blocks, shapes of the lug grooves and the sipes and arrangement conditions therefor.

### RELATED ART DOCUMENT

### PATENT DOCUMENT

Patent Document 1: Japanese Unexamined Patent Application Publication No. 2009-214761.
Attention is drawn to the disclosures of JP2013-216149, EP2,436,538 and JP H05-112105.

### SUMMARY OF THE INVENTION

### PROBLEMS TO BE SOLVED BY THE INVENTION

However, improvement in on-snow performance of run-flat tires, among which, particularly, of side-reinforced type run-flat tires, has not been sufficiently studied to date.

Accordingly, it is an object of the present invention to provide a side-reinforced type run-flat tire having further improved on-snow performance as compared with conventional tires by solving the above problem.

### MEANS FOR SOLVING THE PROBLEMS

In the side-reinforced type run-flat tires, the presence of the side-reinforcing rubber tends to increase the ground contact pressure of a shoulder land portion, and thus wear tends to more easily proceed on the shoulder land portion than an inner land portion. From this point of view, the inventor of the present invention conducted intensive and extensive studies and, as a result, found that a tire having improved on-snow performance without sacrificing anti-wear performance can be provided by arranging circumferential sipes continuing in a tire circumferential direction according to predetermined conditions,, thereby completing the present invention.

Specifically, the present invention is characterized by a run-flat tire that includes a tread portion, a pair of sidewall portions continued to both sides of the tread portion, and a pair of bead portions continued to the respective sidewall portions, the sidewall portions being provided with a side-reinforcing rubber having a crescent-shaped cross section, in which at least one circumferential groove extending in a tire circumferential direction and a plurality of rows of circumferential sipes continuing in the tire circumferential direction are provided in a tread surface of at least one tread half-width region of a pair of tread half-width regions bordered by a tire equatorial plane; at least one shoulder portion circumferential sipe is provided in a shoulder land portion defined by a tread ground-contact end and an outermost circumferential groove located on a tire widthwise outermost side; and at least one inner circumferential sipe is provided in an inner land portion adjacent to a tire widthwise inner side of the outermost circumferential groove, in which a sipe width of the shoulder portion circumferential sipe is larger than that of the inner circumferential sipe, and a sipe depth of the shoulder portion circumferential sipe is smaller than that of the inner circumferential sipe.

In the present invention, in a tire widthwise cross section, an upper end portion of the side-reinforcing rubber is preferably located on a further inner side in a tire widthwise direction than the shoulder portion circumferential sipe, and also is preferably located on a further outer side in the tire widthwise direction than the outermost circumferential groove.

Additionally, in the present invention, a sipe width ws of the shoulder portion circumferential sipe and a sipe width wi of the inner circumferential sipe preferably satisfy 1.7 < ws/wi < 2.1. Furthermore, in the present invention, a sipe depth ds of the shoulder portion circumferential sipe and a sipe depth di of the inner circumferential sipe preferably satisfy 1.6 < di/ds < 1.9.

Herein, tread half-width region refers to a region corresponding to 1/2 of a linear distance between both ends of a tread pattern portion when the tire is mounted on an applicable rim, filled with a prescribed inner pressure, and is in an unloaded state. Additionally, tread ground-contact end refers to a tire widthwise ground-contact end of the tire when the tire is mounted on an applicable rim, filled with a prescribed inner pressure, and is loaded under a maximum applied load. In addition, "applicable rim" refers to a rim prescribed by industrial specifications valid in regions where the tire is produced and used, such as JATMA (The Japan Automobile Tyre Manufacturers Association) YEAR BOOK in Japan, ETRTO (European Tyre and Rim Technical Organisation) STANDARD MANUAL in Europe, and TRA (THE TIRE and RIM ASSOCIATION INC.) YEAR BOOK in the United States; "prescribed inner pressure" refers to an inner pressure (a maximum air pressure) corresponding to a tire maximum loading capacity under specifications set by the JATMA or the like for a tire having an applicable size when mounted on an applicable rim; and "maximum applied load" refers to a load corresponding to the maximum loading capacity described above. Furthermore, the "groove width" of each groove refers to an opening width of a tire outer surface in a cross section perpendicular to a direction in which each groove extends in a state where the tire is mounted on an applicable rim, filled with a prescribed inner pressure, and unloaded.

### EFFECTS OF THE INVENTION

The present invention has enabled provision of a side-reinforced type run-flat tire having further improved on-snow performance as compared with conventional tires.

### BRIEF DESCRIPTION OF THE DRAWINGS

FIG. 1 is a partially developed view depicting a tread surface portion of one example of a run-flat tire of the present invention.
FIG. 2 shows an example of the run-flat tire of the present invention, in which (a) is a widthwise cross-sectional view and (b) is a partially developed view depicting the tread surface portion.
FIG. 3 is a schematic side view depicting another example of the run-flat tire of the present invention.
FIG. 4 is a cross-sectional view depicting one example of a turbulence-generating concave-convex portion provided on a sidewall portion of the run-flat tire of the present invention.

### MODE FOR CARRYING OUT THE INVENTION

Hereinafter, embodiments of the present invention will be described in detail with reference to the drawings.

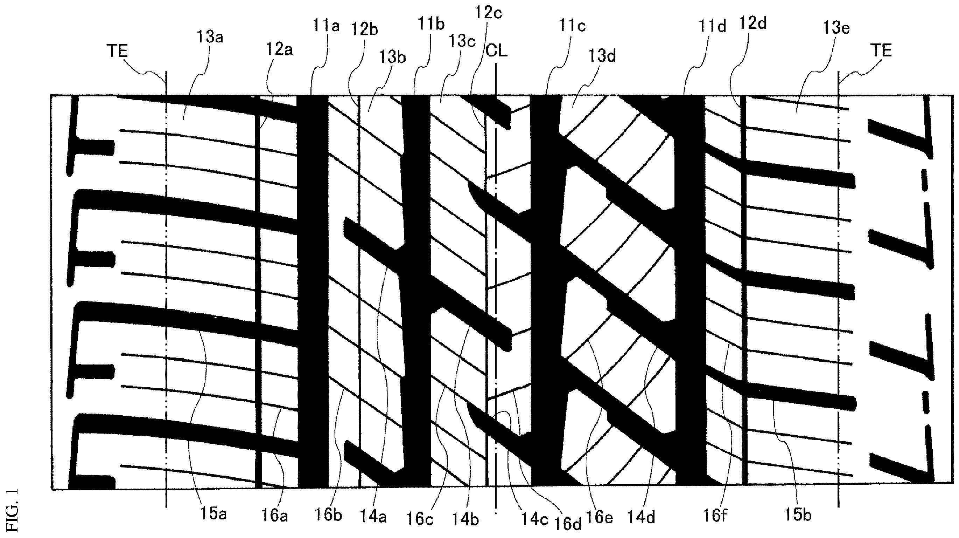

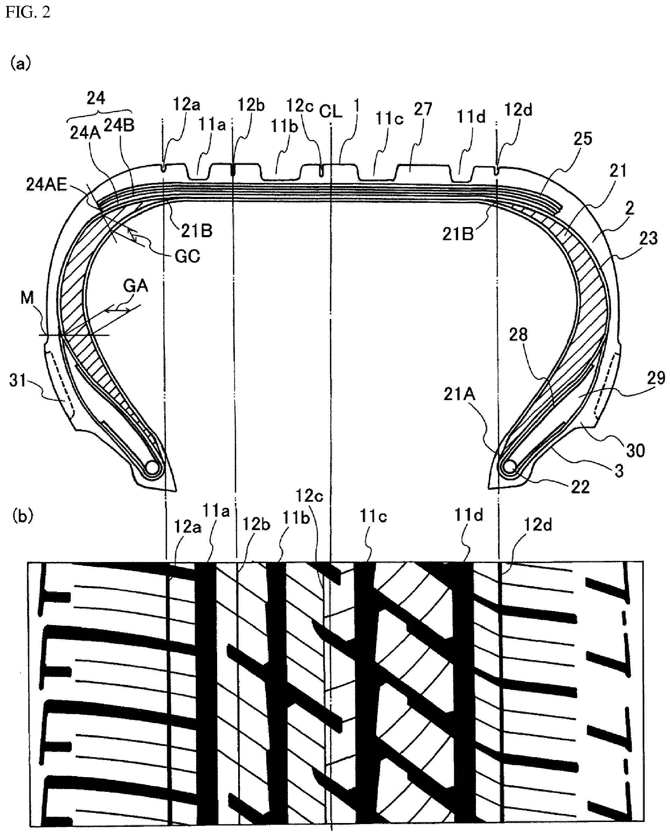

FIG. 1 is a partially developed view depicting a tread surface portion of one example of a run-flat tire of the present invention. Additionally, FIG. 2 is an example of the run-flat tire of the present invention, in which (a) shows a widthwise cross-sectional view and (b) shows a partially developed view depicting the tread surface portion. The illustrated tread pattern is a so-called directional pattern that designates a tire rotation direction when mounted on a vehicle, in which the upper side of the page indicates a vehicle mounting outer side, and the lower side of the page indicates a vehicle mounting inner side.

As indicated in FIG. 2, the run-flat tire of the present invention includes a tread portion 1, a pair of sidewall portions 2 continued to both sides of the tread portion 1, and a pair of bead portions 3 continued to the respective sidewall portions 2, and a side-reinforcing rubber 21 having a crescent-shaped cross section is arranged on the sidewall portions 2.

Additionally, as indicated in FIG. 1, in the run-flat tire of the present invention, two circumferential grooves 11a and 11b extending in a tire circumferential direction and three rows of circumferential sipes 12a, 12b, and 12c continuing in the tire circumferential direction are provided in a tread surface of at least one tread half-width region of a pair of tread half-width regions bordered by a tire equatorial plane CL, in the illustrated example, in the tread surface of the tread half-width region of a vehicle mounting outer side, as well as one shoulder portion circumferential sipe 12a is provided in a shoulder land portion 13a defined by a tread ground-contact end TE and an outermost circumferential groove 11a located on a tire widthwise outermost side, and one inner circumferential sipe 12b is provided in an inner land portion 13b adjacent to a tire widthwise inner side of the outermost circumferential groove 11a. In order to improve on-snow performance, particularly on-snow turning performance, it is considered effective to arrange sipes in a tire circumferential direction to enhance an edge effect on tire widthwise input. Thus, in the present invention, two or more rows of circumferential sipes are provided in the tread surface of at least one tread half-width region, and in which the circumferential sipes are provided, particularly, in the shoulder land portion and the inner land portion, respectively, thereby enabling improvement in on-snow turning performance. Herein, the term sipe in the present invention refers to a thin groove having a width that allows for closing when contacted to ground. In addition, the term "continuing" in the circumferential sipes continuing in the tire circumferential direction includes cases where the sipes straddle lug grooves and lateral grooves, as illustrated.

Herein, the circumferential grooves that are provided in the tread surface of the at least one tread half-width region may be at least one in number, and for example, can be from one to two in number. The circumferential sipes that are provided in the tread surface of the at least one tread half-width region may be provided in a plurality of rows, and for example, can be provided in from one to three rows, particularly in from one to two rows. Additionally, the shoulder portion circumferential sipe may be provided in at least one row in the shoulder land portion 13a, and for example, can be provided in from one to two rows, and the inner circumferential sipe may be provided in at least one row in the inner land portion 13b, and for example, can be provided in from one to two rows.

Additionally, in the present invention, an important point is that a sipe width of the shoulder portion circumferential sipe 12a is larger than that of the inner circumferential sipe 12b and a sipe depth of the shoulder portion circumferential sipe 12a is smaller than that of the inner circumferential sipe 12b. In other words, when the sipe width and sipe depth of the shoulder portion circumferential sipe 12a are defined as ws and ds, respectively, and the sipe width and sipe depth of the inner circumferential sipe 12b are defined as wi and di, respectively, ws > wi and ds < di are satisfied.

As described above, on-snow turning performance can be improved due to the edge effect by the arrangement of the circumferential sipes, but on the other hand, land portion rigidity in a tire widthwise direction is reduced. Accordingly, it is important to suppress the reduction of the land portion rigidity to suppress deterioration of anti-wear performance. In order to suppress the reduction of the land portion rigidity, it is conceivable to shallow the depth of the circumferential sipes. However, simply shallowing the depth of the circumferential sipes leads to disappearance of the circumferential sipes at an initial stage of wear and also deterioration of on-snow performance. Accordingly, the present invention relatively determines the sipe widths and sipe depths of the circumferential sipes provided in the shoulder land portion and the circumferential sipes provided in the inner land portion to maintain anti-wear performance and the like while improving on-snow turning performance on the tread surface portion as a whole.

Specifically, in side-reinforced type run-flat tires, the presence of a side-reinforcing rubber tends to increase ground contact pressure on the shoulder land portion. Due to this, uneven wear tends to more easily proceed on the shoulder land portion as compared to the inner land portion. Thus, in order to maintain particularly high land portion rigidity on the shoulder land portion, the present invention shallows the circumferential sipes of the shoulder land portion to ensure anti-wear performance. However, since simply shallowing the circumferential sipes thereof reduces the edge effect, the sipe widths are made large to increase the edge effect so as to ensure an effect on improvement in on-snow performance. On the other hand, in the inner land portion, deepening the sipes reduces rigidity but can increase the edge effect, so that an effect of an edge component on improvement in on-snow performance can be prolonged until a later stage of wear. However, since deepening the sipes and increasing the sipe width leads to excessive reduction of the rigidity, the sipe width of the circumferential sipe of the inner land portion is made smaller than that of the circumferential sipe of the shoulder land portion.

Particularly, the sipe width ws of the shoulder portion circumferential sipe 12a and the sipe width wi of the inner circumferential sipe 12b preferably satisfy 1.7 < ws/wi < 2.1, and the sipe depth ds of the shoulder portion circumferential sipe 12a and the sipe depth di of the inner circumferential sipe 12b preferably satisfy 1.6 < di/ds < 1.9. By setting the ratios of the sipe widths and the sipe depths to the above ranges, on-snow performance and anti-wear performance can be obtained in well balance, which is preferable.

In the present invention, it is only important that the circumferential sipes that satisfy the above conditions are provided in the tread surface of the tread, whereby the desired effect of the present invention is obtainable, and there is no particular limitation regarding details of other things such as a tire structure and materials of the respective members.

For example, in the present invention, preferably, the circumferential sipes are arranged in larger number in the tread half-width region of a tire mounting direction outer side than the tread half-width region of a tire mounting direction inner side. In the illustrated example in FIG. 1, the three circumferential sipes 12a, 12b, and 12c are provided in the tread half-width region of the tire mounting direction outer side (the upper side of the page), and one circumferential sipe (a shoulder portion circumferential sipe) 12d is provided in the tread half-width region of the tire mounting direction inner side.

In addition, in the illustrated pattern in FIG. 1, four circumferential grooves 11a to 11d extending in the tire circumferential direction are arranged over the entire tread width, and five land portions 13a to 13e are provided by defining by these four circumferential grooves 11a to 11d. In the illustrated pattern, there is no circumferential groove on the tire equatorial plane CL. Lug grooves 14a and 14b extend from the circumferential groove 11b to both sides of the tire widthwise direction, and lug grooves 14c and 14d extend from the circumferential groove 11c to both sides of the tire widthwise direction. The lug groove 14d communicates with the circumferential groove (an outermost circumferential groove) 11d. Furthermore, a lateral groove 15a extends from the circumferential groove 11a to the tire widthwise outer side, and a lateral groove 15b extends from the circumferential groove 11d to the tire widthwise outside. Additionally, reference numerals 16a to 16f denote sipes arranged communicating with the respective circumferential grooves.

Herein, the lateral groove 15a is formed so as to have a shallow groove depth at a part where the lateral groove 15a communicates with the circumferential groove 11a, and the lateral groove 15b is formed so as to have a shallow groove depth at a part where the lateral groove 15b communicates with the circumferential groove 11d. Additionally, the lug groove 14c is formed so as to have a shallow groove depth at a part where the lug groove 14c communicates with the circumferential groove 11c, and the lug groove 14d is formed so as to have a shallow groove depth at a part where the lug groove 14d communicates with the circumferential groove 11d. Furthermore, the shape of a right edge portion of the lug grooves 14a at a part where the lug grooves 14a communicates with the circumferential groove 11b and the shape of a left edge portion of the the lug groove 14b at a part where the lug groove 14b communicates with the circumferential groove 11b are chamfered to allow smooth connection. The shape of a right edge portion of the the lug groove 14c at a part where the lug groove 14c communicates with the circumferential groove 11c and the shapes of edge portions of the lug groove 14d at parts where the lug groove 14d communicates with the circumferential grooves 11c and 11d where the grooves form an acute angle therebetween are also chamfered to allow smooth connection.

In addition, in the present invention, specific sipe widths and sipe depths of the respective circumferential sipes can be appropriately set based on a tire size and the like, and are not particularly limited. Preferably, the sipe width of the shoulder portion circumferential sipes 12a and 12d can be from 1.2 to 1.5 mm, and the sipe width of the inner circumferential sipe 12b and the circumferential sipe 12c can be from 0.7 to 1.0 mm. Additionally, preferably, the sipe depth of the shoulder portion circumferential sipes 12a and 12d can be from 2.4 to 3.0 mm, and the sipe depth of the inner circumferential sipe 12b and the circumferential sipe 12c can be from 3.0 to 6.0 mm.

Furthermore, for example, the width of the circumferential grooves 11a to 11d can be, for example, within a range of from 5 to 10 mm. Herein, the width of the circumferential grooves refers to a smallest groove width of groove widths measured in the tire widthwise direction.

In addition, repeating pitches of the lug grooves and the lateral grooves in the present invention are not particularly limited.

Additionally, as indicated in FIG. 2, the tire of the present invention includes, as a skeleton thereof, a carcass 23 that is arranged astride bead cores 22 respectively embedded in the pair of bead portions 3 to reinforce the respective portions. On a tire radial outer side of the carcass 23 are sequentially arranged inclined belt layers 24 provided in such a manner that cord directions intersect with each other between the layers and a belt-reinforcing layer 25 whose cord direction is substantially the tire circumferential direction, and on a tire radial outer side of the belt-reinforcing layer 25 is arranged a tread rubber 27 forming the tread surface portion of the tread portion 1. Furthermore, in the bead portions 3 is arranged a bead portion-reinforcing cord layer 28 that is provided between the carcass 23 and the bead cores 22 and folded back so as to wrap the bead cores 22 from tire radial inner sides thereof, and on tire radial outer sides of the bead cores 22 are arranged bead fillers 29.

The carcass 23 includes one or more carcass plies, in the illustrated example, one carcass ply. The carcass ply is formed by coating a plurality of cords made of organic fiber or metal such as steel with coating rubber. Additionally, in the illustrated example, both end portions of the carcass 23 are folded back from a tire inner side to a tire outer side around the bead cores 22, extend to the tire radial outer side, and extend to positions beyond a tire maximum-width part M. In the case of two carcasses 23, the other one thereof can be extended, for example, to near the bead portions 3, thereby enabling improvement in run-flat durability.

In addition, in the present embodiment, both end portions of the carcass 23 are folded back around the bead cores 22 to anchor the carcass 23 to the bead cores 22. However, the present invention is not limited to this configuration, and for example, a plurality of bead core pieces may be arranged in the bead portions 3 to sandwich both end portions of the carcass 23 by the plurality of bead core pieces so as to anchor the carcass 23 to the bead cores 22.

The inclined belt layer 24 includes one or more belt plies, in the illustrated example, two belt plies 24A and 24B. The belt plies are formed by coating a plurality of cords made of metal such as steel or organic fiber with coating rubber. The cords forming the belt plies extend in a direction inclined with respect to the tire circumferential direction and intersect with each other between the layers.

Additionally, the belt-reinforcing layer 25 covers an entire tire widthwise part of the inclined belt layer 24 and is arranged in one or more sheets, in the illustrated example, in two sheets. The belt-reinforcing layer 25 is formed by coating a plurality of cords made of metal such as steel or organic fiber with coating rubber. The cords forming the belt-reinforcing layer 25 extend substantially in the tire circumferential direction.

Furthermore, preferably, the tread rubber 27 includes two layers of different rubber compositions layered in a tire radial direction. Desired tread rubber physical properties can be obtained by appropriately selecting respective rubber compositions that form a base rubber arranged in the tire radial inner side and a cap rubber arranged in the tire radial outer side.

Still furthermore, the bead portion-reinforcing cord layer 28 is provided by being folded back around the bead cores 22 between the carcass 23 and the bead cores 22. Arranging the bead portion-reinforcing cord layer 28 can enhance rigidity of the bead portions 3. The bead portion-reinforcing cord layer 28 is formed by coating a plurality of cords made of organic fiber such as aromatic polyamide or aliphatic polyamide or the like with coating rubber. Additionally, examples of the aromatic polyamide include poly-paraphenylene-terephthalamide and KEVLAR (registered trademark) available from DuPont Co.

The side-reinforcing rubbers 21 are arranged on a tire widthwise inner side of the carcass 23 on the sidewall portions 2. The side-reinforcing rubber 21 is a reinforcing rubber for allowing a vehicle to run a predetermined distance while holding weighs of the vehicle and a passenger(s) when the inner pressure of a tire is reduced due to puncture or the like. The side-reinforcing rubber 21 is usually formed by using rubber as a main ingredient, but may be formed by using other materials, for example, thermoplastic resin or the like as a main ingredient. Additionally, the side-reinforcing rubber 21 may include other materials such as filler, short fiber, and resin as long as a rubber member is a main ingredient.

In addition, on an inner surface of the side-reinforcing rubber 21 is arranged an unillustrated inner liner from one bead portion 3 to the other bead portion 3. The inner liner can be formed by using, for example, butyl rubber as a main ingredient, but not limited thereto, and other rubber members or resin may be used as a main ingredient.

In the side-reinforcing rubber 21, a lower end portion 21A thereof on the bead portion 3 side overlaps with the bead filler 29 with the carcass 23 therebetween, and an upper end portion 21B thereof on the tread portion 1 side overlaps with the inclined belt layer 24 with the carcass 23 therebetween. Specifically, the upper end portion 21B of the side-reinforcing rubber 21 overlaps with the belt ply 24A having a maximum width with the carcass 23 therebetween.

As indicated in FIG. 2, in the tire widthwise cross section, the upper end portion 21B of the side-reinforcing rubber 21 is preferably located on a further inner side in the tire widthwise direction than the shoulder portion circumferential sipe 12a, 12d. Ground contact pressure is easily increased particularly in a region where the side-reinforcing rubber 21 overlaps with the shoulder land portion 13a, 13e in the tire widthwise direction. Thus, by arranging the shoulder portion circumferential sipe 12a, 12d in this region, a larger edge effect can be obtained.

Additionally, as indicated in FIG. 2, in the tire widthwise cross section, the upper end portion 21B of the side-reinforcing rubber 21 is preferably located on a further outer side in the tire widthwise direction than the outermost circumferential groove 11a, 11d. In other words, even when, during run-flat running, the tread portion bends in the tire widthwise direction starting from a groove bottom of the outermost circumferential groove, influence of an input due to the bending of the tread portion on the side-reinforcing rubber 21 can be suppressed by allowing the side-reinforcing rubber 21 not to be present on a tire radial inner side of the groove bottom of the outermost circumferential groove 11a, 11d. This enables improvement in durability of the side-reinforcing rubber 21 during run-flat running, so that the occurrence of a buckling phenomenon on the sidewall portions can be suppressed over a long period of time. In addition, an effect of suppressing increase in tire weight can also be obtained. Additionally, such a buckling phenomenon on the sidewall portions tends to easily occur in tires having a high tire cross-sectional height, for example, in tires having a tire cross-sectional height of 115 mm or more. Herein, tire cross-sectional height refers to a length corresponding to 1/2 the difference between a tire outer diameter and a rim diameter, as defined in Year Book 2014 year edition of JATMA (Japan Automobile Tire Manufacturers Association).

In addition, a thickness GC of the side-reinforcing rubber 21 measured on a normal line of the carcass 23 that passes through a tire widthwise end portion 24AE of the belt ply 24A having a maximum width is preferably set to a thickness of 70% or more of a thickness GA of the side-reinforcing rubber 21 at the tire maximum-width part M of the carcass 23. This enhances rigidity in vicinities of the tread end portion that becomes a starting point of a buckling phenomenon on the sidewall portions, so that the shoulder portion regions of the tread portion 1 become further harder to be bent. Thus, the occurrence of a buckling phenomenon on the sidewall portions during run-flat running can be effectively suppressed.

Furthermore, in the present invention, a break elongation of the side-reinforcing rubber 21 is preferably 130% or more. Herein, break elongation refers to a break elongation (%) measured based on JIS K6251 (using a dumbbell-shaped No. 3 test piece). In the run-flat tire, when buckling occurs on the sidewall portions 2 due to a lateral force applied during run-flat running, the inner surface of the side-reinforcing rubber 21 is stretched and deformed (elongated). The deformation due to stretching (tensile deformation) easily becomes large at a part where the side-reinforcing rubber 21 overlaps with the bead filler 29 with the carcass 23 therebetween. However, by setting the break elongation of the side-reinforcing rubber 21 to 130% or more, damaging to (breaking of) the side-reinforcing rubber 21 can be suppressed as compared to, for example, the case where the break elongation of the side-reinforcing rubber 21 is set to less than 130%.

Preferably, the break elongation of the side-reinforcing rubber 21 is particularly 190% or less. This makes it unnecessary to excessively thicken the side-reinforcing rubber 21 in order to ensure durability during run-flat running, so that excessive weight increase can be suppressed.

As illustrated, in the tire of the present invention, a circumferential projection 30 is provided on a tire surface near the bead filler 29. The circumferential projection 30 has the same cross-sectional shape as a projection called rim guard, having a side face along the rim, and a tire widthwise end portion of the projection is located on a further outer side in the tire widthwise direction than a tire widthwise end portion of the rim. Additionally, as illustrated, the circumferential projection 30 can be provided, for example, such that a tire radial outer end portion thereof is located near the tire maximum-width part M. Usually, no rim guard is provided in tires having a large tire height, for example, those having a tire cross-sectional height of 115 mm or more. In the present invention, however, the rim guard-shaped circumferential projection 30 is provided to suppress deformation of the sidewall portions 2, thereby enabling improvement in durability during run-flat running.

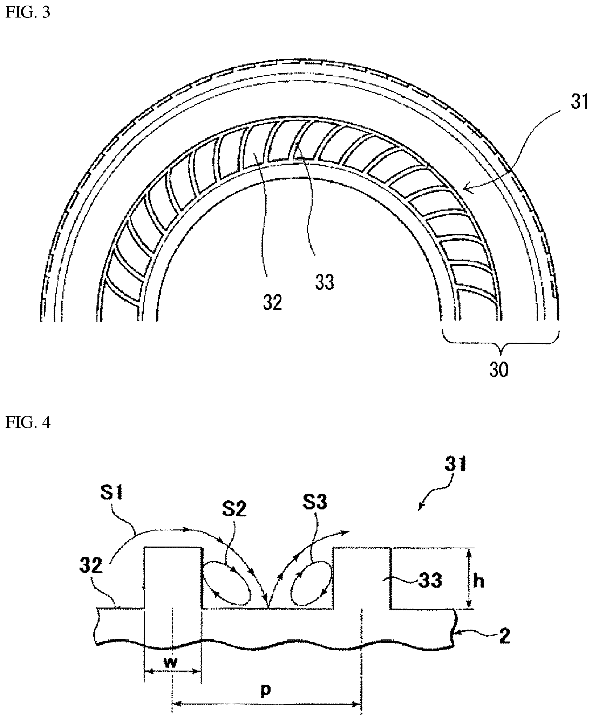

FIG. 3 is a schematic side view depicting another example of the run-flat tire of the present invention. Additionally, FIG. 4 is a cross-sectional view depicting one example of a turbulence-generating concave-convex portion provided on the sidewall portion 2 of the run-flat tire of the present invention. In the present invention, a turbulence-generating concave-convex portion 31 substantially extending in the tire radial direction is preferably provided at intervals in the tire circumferential direction on at least a part of the sidewall portions 2, as illustrated in FIG. 4. The concave-convex portion 31 includes groove portions 32 and protruding portions 33, and during running, a turbulent flow generated by the concave-convex portion 31 collides with the sidewall portion 2 to cool the sidewall portion 2, thereby enabling improvement in run-flat durability performance. In the illustrated example in FIG. 3, the groove portions 32 forming the turbulence-generating concave-convex portion 31 are provided in a concave shape in the circumferential projection 30. In other words, the turbulence-generating concave-convex portion 31 and the circumferential projection 30 are provided substantially in the same position in the tire radial direction. Additionally, the direction in which the turbulence-generating concave-convex portion 31 extends can be set to be, for example, in a range of from -70 degrees to +70 degrees with respect to the tire radial direction.

Preferably, the concave-convex portion 31 satisfies a relationship of 1.0 ≤ p/h ≤50.0 and 1.0 ≤ (p - w)/w ≤ 100.0 where h is a height of the protruding portions 33, p is a pitch of the protruding portions 33, and w is a width of the protruding portions 33, as illustrated in FIG. 4. Additionally, more preferably, the height h of the protruding portion 33 is set to be 0.5 mm ≤ h ≤ 7 mm, and the width w of the protruding portion 33 is set to be 0.3 mm ≤ w ≤ 4 mm.

As illustrated in FIG. 4, in response to rotation of the tire, an air flow S1 in contact with a region of the sidewall portion 2 having no concave-convex portion 31 formed thereon is separated from the sidewall portion 2 by the protruding portion 33 and goes over the protruding portion 33. At this time, a portion (region) S2 where the air flow stagnates occurs at a rear surface side of the protruding portion 33. Then, the air flow S1 again sticks to a bottom portion between the protruding portion 33 and the next one, and again is separated by the next protruding portion 33. At this time, a portion (region) S3 where the air flow stagnates occurs between the air flow S1 and the next protruding portion 33. Herein, it is conceivable that increasing a velocity gradient (speed) on the region with which the turbulent flow S1 contacts is advantageous in order to increase heat dissipation efficiency.

The present invention can be used without particularly limiting the tire size. Examples of tire sizes having a relatively high tire cross-sectional height as described above (for example, 115 mm or more) include 225/55R17, 235/55R18, 195/60R15, 225/60R16, 225/60R17, 235/60R17, 205/65R15, 225/65R16, 225/65R17, 235/65R16, and 235/65R17.

### EXAMPLES

Hereinafter, the present invention will be described in more detail by using Examples.

### <Example>

A run-flat tire of an Example having a tread pattern and a cross-sectional shape as indicated in FIGs. 1 and 2 was produced with tire size 235/65R17. The carcass was composed of two nylon carcass plies, and the inclined belt layer was composed of two steel belt plies having a cord angle of ±68 degrees with respect to the tire circumferential direction. Additionally, the belt-reinforcing layer was composed of a rubber-coated layer made of polyester cords substantially extending in the tire circumferential direction and was arranged in two sheets so as to cover the entire tire widthwise part of the inclined belt layer.

As illustrated, in this tire, a tread surface of a tread half-width region on a vehicle mounting outer side of a pair of tread half-width regions bordered by a tire equatorial plane was provided with two circumferential grooves extending in the tire circumferential direction and three rows of circumferential sipes continuing in the tire circumferential direction; a shoulder land portion defined by a tread ground-contact end and an outermost circumferential groove located on a tire widthwise outermost side was provided with one shoulder portion circumferential sipe; an inner land portion adjacent to a tire widthwise inner side of the outermost circumferential groove was provided with one inner circumferential sipe; furthermore, a tread surface of a tread half-width region on a vehicle mounting inner side was provided with two circumferential grooves extending in the tire circumferential direction and one row of a circumferential sipe continuing in the tire circumferential direction; and a shoulder land portion defined by a tread ground-contact end and an outermost circumferential groove located on a tire widthwise outermost side was provided with one shoulder portion circumferential sipe. In addition, the sipe width and sipe depth of the shoulder portion circumferential sipe and the sipe width and sipe depth of the inner circumferential sipe were set as indicated in Table 1 below. Additionally, the sipe width and sipe depth of the circumferential sipe provided near the tire equatorial plane CL were set to be the same as those of the inner circumferential sipe.

Furthermore, in the tire widthwise cross section of the tire, the upper end portion of the side-reinforcing rubber was located on a further inner side in the tire widthwise direction than the shoulder portion circumferential sipe and on a further outer side in the tire widthwise direction than the outermost circumferential groove.

### <Comparative Example>

A run-flat tire of a Comparative Example was produced in the same manner, except that the sipe width and sipe depth of the shoulder portion circumferential sipe and the sipe width and sipe depth of the inner circumferential sipe were changed as indicated in Table 1 below.

### <On-Snow Turning Performance>

Each sample tire was assembled on a rim with rim size 7.5J-17, filled with an inner pressure of 210/250 kPa, mounted on a vehicle, and limit lateral acceleration was measured by performing grip driving on a circumference with a radius of 30 m on a snowy road. Results were indexed to 100 for the limit lateral acceleration of the tire of the Comparative Example. The larger the index value, the larger the limit lateral acceleration, which indicates favorable on-snow turning performance.

### <Block Rigidity>

Block rigidity of each sample tire was calculated using simulation software "TBA". Results were indexed to 100 for the Comparative Example. The larger the index value, the higher the block rigidity, which indicates high and favorable block rigidity.

These results are given together in Table 1 below.

**Table 1**

| | Sipe width | | Sipe depth | | On-snow turning performance (Index) | Block rigidity (Index) |
|---|---|---|---|---|---|---|
| | Shoulder portion circumferential sipe | Inner circumferential sipe | Shoulder portion circumferential sipe | Inner circumferential sipe | | |
| Ex. | 1.5 | 0.7 | 3.0 | 4.7 | 105 | 103 |
| Comp-Ex. | 1.0 | 1.0 | 3.0 | 3.0 | 100 | 100 |

As indicated in the above Table, it was confirmed that the Example specifying magnitude relationships between the sipe widths and sipe depths of the shoulder portion circumferential sipe and the inner circumferential sipe provided under the predetermined conditions has improved on-snow turning performance without reducing block rigidity as compared with the Comparative Example not satisfying the conditions.

### DESCRIPTION OF SYMBOLS

- 1: Tread portion
- 2: Sidewall portion
- 3: Bead portion
- 11a, 11d: Outermost circumferential groove
- 11b, 11c: Circumferential groove
- 12a, 12d: Shoulder portion circumferential sipe
- 12b: Inner circumferential sipe
- 12c: Circumferential sipe
- 13a: Shoulder land portion
- 13b: Inner land portion
- 13c, 13d: Land portion
- 13e: Shoulder land portion
- 14a, 14b, 14c, 14d: Lug groove
- 15a, 15b: Lateral groove
- 16a to 16f: Sipe
- 21: Side-reinforcing rubber
- 21A: Lower end portion of side-reinforcing rubber
- 21B: Upper end portion of side-reinforcing rubber
- 22: Bead core
- 23: Carcass
- 24: Inclined belt layer
- 24A, 24B: Belt ply
- 24AE: Tire widthwise end portion of belt ply having a maximum width
- 25: Belt-reinforcing layer
- 27: Tread rubber
- 28: Bead portion-reinforcing cord layer
- 29: Bead filler
- 30: Circumferential projection
- 31: Turbulence-generating concave-convex portion
- 32: Groove portion
- 33: Protruding portion
- S1: Air flow
- S2, S3: Portion (region) where air flow stagnates

## Claims

1. A run-flat tire comprising a tread portion (1), a pair of sidewall portions (2) continued to both sides of the tread portion (1), and a pair of bead portions (3) continued to the respective sidewall portions (2), the sidewall portions (2) being provided with a side-reinforcing rubber (21) having a crescent-shaped cross section, wherein
at least one circumferential groove (11) extending in a tire circumferential direction and a plurality of rows of circumferential sipes (12) continuing in the tire circumferential direction are provided in a tread surface of at least one tread half-width region of a pair of tread half-width regions bordered by a tire equatorial plane; at least one shoulder portion circumferential sipe (12a, 12d) is provided in a shoulder land portion (13e) defined by a tread ground-contact end and an outermost circumferential groove (11a, 11d) located on a tire widthwise outermost side; and at least one inner circumferential sipe (12b) is provided in an inner land portion (13b) adjacent to a tire widthwise inner side of the outermost circumferential groove (11a, 11d), in which
a sipe width of the shoulder portion circumferential sipe (12a, 12d) is larger than that of the inner circumferential sipe (12b), and a sipe depth of the shoulder portion circumferential sipe (12a, 12d) is smaller than that of the inner circumferential sipe (12b).

2. The run-flat tire according to claim 1, wherein, in a tire widthwise cross section, an upper end portion (21B) of the side-reinforcing rubber (21) is located on a further inner side in a tire widthwise direction than the shoulder portion circumferential sipe (12a, 12d).

3. The run-flat tire according to claim 1, wherein, in a tire widthwise cross section, an upper end portion (21B) of the side-reinforcing rubber (21) is located on a further outer side in a tire widthwise direction than the outermost circumferential groove (11a, 11d).

4. The run-flat tire according to claim 1, wherein a sipe width ws of the shoulder portion circumferential sipe (12a, 12d) and a sipe width wi of the inner circumferential sipe (12b) satisfy 1.7 < ws/wi < 2.1.

5. The run-flat tire according to claim 1, wherein a sipe depth ds of the shoulder portion circumferential sipe (12a, 12d) and a sipe depth di of the inner circumferential sipe (12b) satisfy 1.6 < di/ds < 1.9.

## Patentansprüche

1. Notlaufreifen umfassend einen Laufflächenabschnitt (1), ein Paar von Seitenwandabschnitten (2), welche zu beiden Seiten des Laufflächenabschnitts fortgesetzt sind, und ein Paar von Wulstabschnitten (3), welche zu den entsprechenden Seitenwandabschnitten (2) fortgesetzt sind, wobei die Seitenwandabschnitte (2) mit einem Seitenverstärkungsgummi (21) versehen sind, welches einen Halbmondquerschnitt aufweist, wobei
mindestens eine Umfangsrille (11) welche sich in einer Reifenumfangsrichtung erstreckt und eine Mehrzahl von Reihen von Umfangslamellen (12), welche in der Reifenumfangsrichtung fortgesetzt sind, in einer Lauffläche von mindestens einem Laufflächenhalbbreitenbereich eines Paars von Laufflächenhalbbreitenbereichen bereitgestellt sind, welche durch eine Reifenäquatorialebene begrenzt ist; mindestens eine Schulterabschnittumfangslamelle (12a, 12d) in einem Schulterstegabschnitt (13e) bereitgestellt wird, welcher durch ein Laufflächenbodenkontaktende und eine äußerste Umfangsrille (11a, 11d) definiert ist, welche auf einer äußersten Seite in der Reifenbreitenrichtung angeordnet ist; und mindestens eine innere Umfangslamelle (12b) in einem inneren Stegabschnitt (13b) neben einer inneren Seite, in der Reifenbreitenrichtung, der äußersten Umfangsrille (11a, 11d) angeordnet ist, in dem
eine Lamellenbreite der Schulterabschnittumfangslamelle (12a, 12d) größer als die der inneren Umfangslamelle (12b) ist, und eine Lamellentiefe der Schulterabschnittumfangslamelle (12a, 12d) kleiner als die der inneren Umfangslamelle (12b) ist.

2. Notlaufreifen nach Anspruch 1, wobei, in einem Reifenbreitenquerschnitt, ein oberer Endabschnitt (21B) des Seitenverstärkungsgummis (21) auf einer weiter innenliegenden Seite in einer Reifenbreitenrichtung angeordnet ist, als die Schulterabschnittumfangslamelle (12a, 12d).

3. Notlaufreifen nach Anspruch 1, wobei, in einem Reifenbreitenquerschnitt, ein oberer Endabschnitt (21B) des Seitenverstärkungsgummis (21) auf einer weiter außenliegenden Seite in einer Reifenbreitenrichtung angeordnet ist, als die äußerste Umfangsrille (11a, 11d).

4. Notlaufreifen nach Anspruch 1, wobei eine Lamellenbreite ws der Schulterabschnittumfangslamelle (12a, 12d) und eine Lamellenbreite wi der inneren Umfangslamelle (12b) die Ungleichung 1,7 < ws/wi < 2,1 erfüllen.

5. Notlaufreifen nach Anspruch 1, wobei eine Lamellentiefe ds der Schulterabschnittumfangslamelle (12a, 12d) und eine Lamellentiefe di der inneren Umfangslamelle (12b) die Ungleichung 1,6 < di/ds < 1,9 erfüllen.

## Revendications

1. Bandage pneumatique à roulage à plat, comprenant une partie de bande de roulement (1), une paire de parties de flanc (2) s'étendant en continu vers les deux côtés de la partie de bande de roulement (1), et une paire de parties de talon (3) s'étendant en continu vers les parties de flanc respectives (2), les parties de flanc (2) étant pourvues d'une gomme de renforcement des flancs (21) ayant une section transversale en forme de croissant, dans lequel
au moins une rainure circonférentielle (11) s'étendant dans une direction circonférentielle du bandage pneumatique, et plusieurs rangées de lamelles circonférentielles (12) s'étendant en continu dans la direction circonférentielle du bandage pneumatique, sont agencées dans une surface de bande de roulement d'au moins une région, correspondant à une demie-largeur de la bande de roulement, d'une paire de régions correspondant à la demie-largeur de la bande de roulement, délimitées par un plan équatorial du bandage pneumatique ; au moins une lamelle circonférentielle de la partie d'épaulement (12a, 12d) étant agencée dans une partie d'appui d'épaulement (13e) définie par une extrémité en contact avec le sol de la bande de roulement et une rainure circonférentielle externe extrême (11a, 11d) située sur un côté externe extrême, dans le sens de la largeur du bandage pneumatique ; et au moins une lamelle circonférentielle interne (12b) étant agencée dans une partie d'appui interne (13b) adjacente à un côté interne, dans le sens de la largeur du bandage pneumatique, de la rainure circonférentielle externe extrême (11a, 11d) ; dans lequel
une largeur de lamelle de la lamelle circonférentielle de la partie d'épaulement (12a, 12d) est supérieure à celle de la lamelle circonférentielle interne (12b), et une profondeur de lamelle de la lamelle circonférentielle de la partie d'épaulement (12a, 12d) est inférieure à celle de la lamelle circonférentielle interne (12b).

2. Bandage pneumatique à roulage à plat selon la revendication 1, dans lequel, dans une section transversale dans le sens de la largeur du bandage pneumatique, une partie d'extrémité supérieure (21B) de la gomme de renforcement des flancs (21) est agencée sur un côté situé plus vers l'intérieur, dans une direction de la largeur du bandage pneumatique, que la lamelle circonférentielle de la partie d'épaulement (12a, 12d).

3. Bandage pneumatique à roulage à plat selon la revendication 1, dans lequel, dans une section transversale dans le sens de la largeur du bandage pneumatique, une partie d'extrémité supérieure (21B) de la gomme de renforcement des flancs (21) est agencée sur un côté situé plus vers l'extérieur, dans une direction de la largeur du bandage pneumatique, que la rainure circonférentielle externe extrême (11a, 11d).

4. Bandage pneumatique à roulage à plat selon la revendication 1, dans lequel une largeur de lamelle ws de la lamelle circonférentielle de la partie d'épaulement (12a, 12d) et une largeur de lamelle wi de la lamelle circonférentielle interne (12b) satisfont la relation de 1,7 < ws/wi < 2,1.

5. Bandage pneumatique à roulage à plat selon la revendication 1, dans lequel une profondeur de lamelle ds de la lamelle circonférentielle de la partie d'épaulement (12a, 12d) et une profondeur de lamelle di de la lamelle circonférentielle interne (12b) satisfont la relation de 1,6 < di/ds < 1,9.
